Europäisches Patentamt

European Patent Office

Office européen des brevets

(19)

(11) Publication number: **0 181 700**
**A1**

## (12) EUROPEAN PATENT APPLICATION

(21) Application number: **85307273.4**

(22) Date of filing: **10.10.85**

(51) Int. Cl.⁴: **B 62 D 1/18**

(30) Priority: **17.10.84 GB 8426278**

(43) Date of publication of application:
**21.05.86 Bulletin 86/21**

(84) Designated Contracting States:
**BE DE FR GB IT**

(71) Applicant: **The British Petroleum Company p.l.c.
Britannic House Moor Lane
London EC2Y 9BU(GB)**

(72) Inventor: **Wells, John Kimberley
The British Petroleum Co. p.l.c. Chertsey Road
Sunbury-on-Thames Middlesex TW16 7LN(GB)**

(74) Representative: **Dodding, Robert Anthony et al,
c/o The British Petroleum Company plc Patents Division
Chertsey Road
Sunbury-on-Thames Middlesex, TW16 7LN(GB)**

(54) Steering mechanism.

(57) A steering mechanism for a vehicle comprises a steering shaft having a steering means connected to its upper end and a steering gear (27) connected to its lower end. The steering shaft comprises an elongate energy absorbing tube (23, 25) having a bond (24) between the tube and one or both of the steering gear and the steering means. The longitudinal axial component of the bond (24) is adapted to disrupt under crash impact and to allow the tube to progressively collapse and absorb the impact energy.

EP 0 181 700 A1

./...

Croydon Printing Company Ltd.

FIG.1

Case5957(2)

# STEERING MECHANISM

The present invention relates to an energy absorbing steering mechanism for use on a vehicle.

It is known to use energy absorbing arrangements to minimise damage to a vehicle and avoid injury to occupants caused by high velocity impacts such as crashes. Examples of these arrangements include collapsible steering wheel columns for automobiles and landing gear assemblies for aircraft or helicopters.

The present invention relates to an energy absorbing steering mechanism suitable for use with a vehicle such as a helicopter and which is capable of absorbing energy during high velocity impact such as is experienced in a crash landing.

Thus according to the present invention there is provided an energy absorbing steering mechanism for a vehicle comprising a steering shaft comprising an elongate energy absorbing tube a steering means connected to the upper end of the steering shaft, a steering gear connected to the lower end of the steering shaft, the tube being bonded to one or both of the steering means and steering gear, the longitudinal axial component of the bond being adapted to disrupt under crash impact and to allow the tube to progressively collapse and absorb the impact energy.

The steering mechanism may be used on a number of vehicles such as for steering the wheels of a helicopter or of an automobile. The means for turning the drive shaft may be manual or power assisted as in an automobile or be motor driven as in a helicopter. The steering gear may be, for example, a rack and pinion arrangement for an automobile.

The energy absorber preferably comprises a hollow tube of composite material which is capable of progressive disintegration under an applied axial load. The composite material may be of fibres and resin. Examples of fibres include fibre glass, carbon fibre and Kevlar (an aramid fibre). Examples of resins include polyester, phenolic and epoxy resins.

The hollow elongate member is attached preferably by adhesive to the driveshaft. In the preferred configuration, a hollow tube is bonded by an adhesive to a peripheral collar on the shaft, the adhesive being adapted to have a peripheral bond sufficiently strong to allow steering forces to be transmitted through the hollow tube to the steered member eg wheels but having a bond along the longitudinal axis of the tube which is disrupted by a severe impact such as a crash.

The peripheral collar preferably has a lower flange adapted to deflect debris from the disrupted tube outwards so that it will not contaminate other mechanisms.

The invention will now be described by way of example only and with reference to the accompanying drawings.

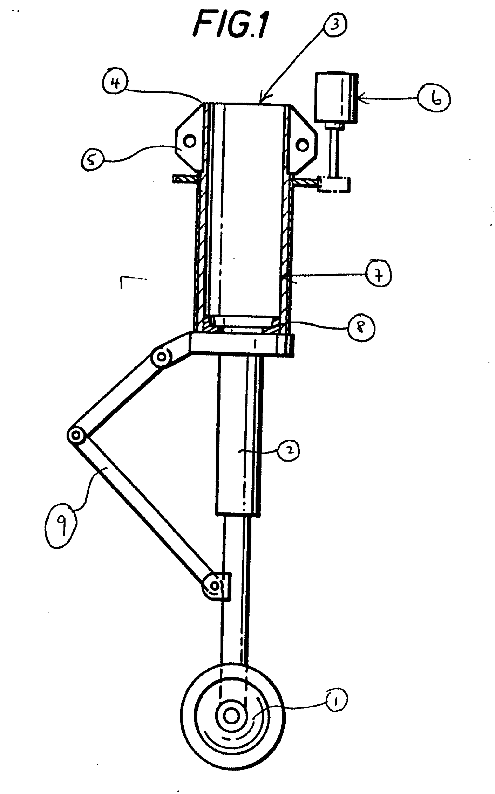

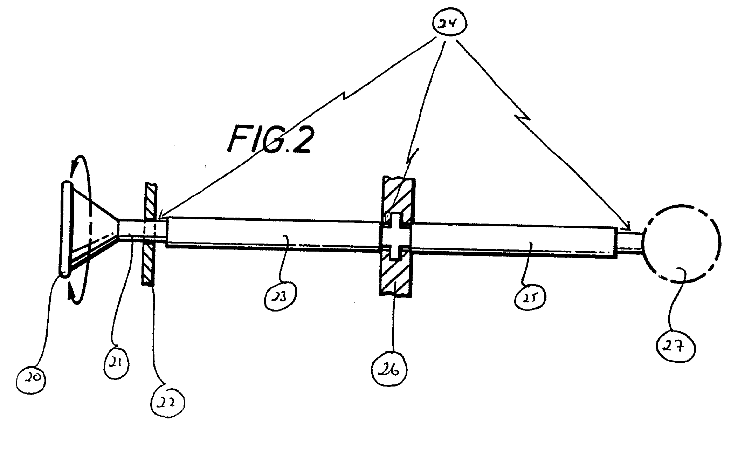

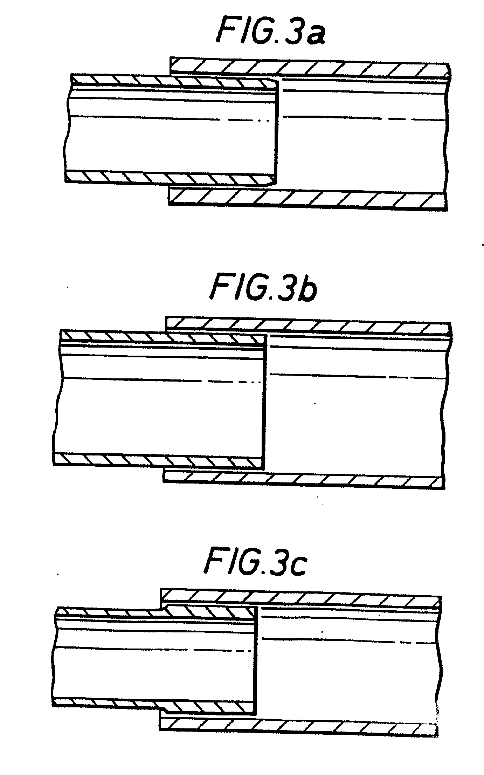

Figure 1 shows a schematic diagram of part of the underside of a helicopter. Figure 2 shows a schematic diagram of an automotive steering column. Figure 3 shows examples of bonding between the energy absorbing composite tube and collar of the undercarriage.

The wheel 1 of the helicopter is connected to the piston 2 of a conventional shock absorber of the hydraulic type. The cylinder body 3 of the hydraulic strut is free to slide and rotate by means of a bearing 4 on the airframe 5. The steering for the wheel 1 is provided by a torque link 9 between the wheel axle and the cylinder body 3 of the strut and a further torque link between the airframe 5 and the cylinder body 3 being provided by the energy absorbing composite tube 7. The drive for the steering is provided by a motor/gear combination 6. The strut 3 is linked at its lower end to the composite tube 7 by means of a peripheral collar 8.

The bonding of the peripheral collar 8 to the composite tube 7 is designed so that it is sufficiently strong to transmit the steering torque from the motor 6 to the strut 3 but the adhesive bond will rupture in case of a sudden strong force along the longitudinal axis of the composite tube as would be the case during crash impact at helicopter landing.

The peripheral collar 8 is turned outwards in the form of an L-shaped flange at its lower end. This serves to deflect debris from disintegration of the composite tube outwardly and away from any mechanism which may be damaged by its presence. There is an inspection gap between the end of the composite tube and the outward flange of the peripheral collar 8.

In normal use of the helicopter, the steering means or motor 6 under the control of the pilot is used to turn the wheels 1. The torque from the motor is transmitted to the wheels through the steering shaft or composite tube 7 via the steering gear or torque link 9.

In case of crash landing of the helicopter, the force along the longitudinal axis of the strut 5 causes the adhesive bond between the collar 8 and tube 7 to disrupt, the tube 7 then collapsing and absorbing the eneergy of impact. The flange of the collar tends to deflect debris from the tube 7 away from any sensitive mechanisms.

Figure 2 shows a schematic diagram of an automotive steering column incorporating a steering mechanism according to the invention.

A steering wheel 20 operates through a steering column 21 linked to the automotive chassis through a sliding upper bearing 22. The steering column 21 is attached to a first energy absorbing composite tube 23 through either bonded or rivetted joints 24. The first tube 23 is connected to one end of a similar second energy absorbing composite tube 25 through a further bonded or rivetted joint 24, the further joint being attached by a bearing 26 to the vehicle chassis. The other end of the second tube is linked by another bonded or rivetted joint 24 to the steering gear 27 or rack of the vehicle.

Normal torsional steering loads are taken by the steel inserts and composite tubes through either bonded or rivetted joints. Under crash loads from the front of the vehicle the steering rack will be forced backwards. The bond/joint at one of the lower tube inserts will fail due to the generated axial load and allow the composite tube to crush. The crush load is reacted into the vehicle chassis at an intermediate thrust bearing. In the event of the driver's chest contacting the steering wheel, one of the joints of the upper tube will disrupt due to the axial force, allowing the upper tube to crush. The crush load of this tube is chosen to ensure no damage is caused to the driver's chest. The crush load of the upper tube is reacted into the chassis at the central bearing.

Figure 3 shows a number of different ways in which the bonding can be made between the composite tube and the peripheral collar. The walls of the collar and the composite tube may be tapered or cut away to give a design bond strength capable of taking steering forces around the periphery of the collar but which rupture along the longitudinal axis of the composite tube under severe forces such as during crash landing. The adhesive used in the bond between the collar and composite tube is suitably an epoxy or acrylic resin. The composite tube is fabricated from glass fibre and polyester resin.

The following techniques may be used to control the strength of the bond between the collar and the composite tube, (i) the use of a tapered adhesive-line thickness (ii) the use of tapered ends of either the tube or the collar and (iii) the control of the shear and axial moduli of the ends of the tube or collar.

Figures 3(a), 3(b) and 3(c) shows bonding arrangements using a taper on the metal or collar fitting. In Figures 3(a) and 3(c) the tapers are at opposite ends of the fitting and Figure 3(b) shows an untapered geometry.

Calculations indicate that the ratio of axial to torsional strengths can be altered by approximately 10% by use of small tapers. More complex profiles would produce larger variations.

Further control of bond strength may be achieved by changing the axial and shear elastic moduli of the ends of the composite material by varying the angle of fibre orientation in the composite tube. Theoretical calculation shows that a 30% change in shear modulus of the composite material may produce a 20% change in the ratio of axial to torsional loads.

Claims:

1 An energy absorbing steering mechanism for a vehicle comprising a steering shaft comprising an elongate energy absorbing tube a steering means connected to the upper end of the steering shaft, a steering gear connected to the lower end of the steering shaft, the tube being bonded to one or both of the steering means and steering gear, the longitudinal axial component of the bond being adapted to disrupt under crash impact and to allow the tube to progressively collapse and absorb the impact energy.

2 A energy absorbing steering mechanism according to claim 1 in which the elongate energy absorbing tube is a hollow tube fabricated from a resin/fibre composite material.

3 A steering mechanism according to claim 1 or 2 in which the elongate energy absorbing tube is bonded by adhesive to one or both of the steering gear and the steering means.

4 A steering mechanism according to claim 3 in which the tube is bonded to a peripheral collar linked on the steering gear.

5 A steering mechanism according to claim 4 in which the peripheral collar has a flange adapted to deflect debris outwardly from a disrupted tube.

6 A vehicle having an energy absorbing steering mechanism according to any of claims 1 to 6.

FIG.1

FIG.2

0181700

## FIG.3a

## FIG.3b

## FIG.3c

0181700

European Patent
Office

**EUROPEAN SEARCH REPORT**

Application number

EP 85 30 7273

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 8, no. 203 (M-326)[1640], 18th September 1984; & JP - A - 59 192256 (MITSUBISHI) 28-05-1984 | 1,2 | B 62 D   1/18 |
| Y | idem | 3 | |
| Y | DE-A-2 540 538  (RENAULT) * page 5, lines 8-21; figure 3 * | 3 | |
| A | | 1 | |
| A | US-D-  360 296  (SMITH) * figures 2-4;  column 4, lines 40-56 * | 4,5 | |
| A | SOVIET INVENTIONS ILLUSTRATED, Section Mechanical & General, Week K 51, 8th February 1984, abtract no. 83-849026, Q22, Derwent Publications Ltd., London, GB; & SU - A - 988 201 (MOSCOW LIKHACHEV CAR WKS) 28-02-1983 | 4,5 | TECHNICAL FIELDS SEARCHED (Int. Cl.4) B 62 D   1/00 |
| A | DE-A-3 229 209 (MESSERSCHMITT-BÖLKOW-BLOHM) * claim 1 *   ---             -/- | 2 | |

The present search report has been drawn up for all claims

| Place of search | Date of completion of the search | Examiner |
|---|---|---|
| BERLIN | 08-01-1986 | STANDRING M A |

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | GB-A-2 028 740 (DAIMLER-BENZ)<br>* page 2, lines 52-83; figures 1-3; claim 4 *<br><br>----- | 1 | |

TECHNICAL FIELDS
SEARCHED (Int. Cl 4)

The present search report has been drawn up for all claims

| Place of search | Date of completion of the search | Examiner |
|---|---|---|
| BERLIN | 08-01-1986 | STANDRING M A |